# EUROPEAN PATENT SPECIFICATION

(11) **EP 3 952 659 B1**
(45) Date of publication and mention of the grant of the patent: **10.08.2022**
(21) Application number: 20713337.2
(22) Date of filing: 30.03.2020
(51) Int. Cl.: A23D 7/005, A23L 35/00

(54) **OIL-IN-WATER EMULSIFIED FOOD COMPOSITION WITH HIGH OLEIC OIL**
ÖL-IN-WASSER-EMULGIERTE LEBENSMITTELZUSAMMENSETZUNG MIT ÖLSÄUREREICHEM ÖL
COMPOSITION ALIMENTAIRE ÉMULSIFIÉ HUILE-DANS-EAU AVEC DE L'HUILE RICHE EN ACIDE OLÉIQUE

(30) Priority: 12.04.2019 EP 19168966
(43) Date of publication of application: 16.02.2022
(73) Proprietor: Unilever IP Holdings B.V., 3013 AL Rotterdam (NL)
(72) Inventor: BEINDORFF, Christiaan Michaël, 6708 WH Wageningen (NL); ERMACORA, Alessia, 6708 WH Wageningen (NL); SILVA PAES, Sabrina, 6708 WH Wageningen (NL)
(74) Representative: Fijnvandraat, Arnoldus
(86) International application number: PCT/EP2020/058965
(87) International publication number: WO 2020/207843

(56) References cited:
- EP-A1- 1 217 983
- EP-A1- 3 459 365
- EP-B1- 1 217 983
- KR-B1- 101 924 066
- SÁNCHES-SALCEDO ET AL: "(Poly)phenolic compounds and antioxidant activity of white (Morus alba) and black (Morus nigra) mulberry leaves: Their potential for new products rich in phytochemicals", JOURNAL OF FUNCTIONAL FOODS,, vol. 18, 1 January 2015 (2015-01-01), pages 1039-1046, XP002782855, DOI: 10.1016/J.JFF.2015.03.053
- AYSEL SÝVACÝ ET AL: "Seasonal changes in antioxidant activity, total phenolic and anthocyanin constituent of the stems of two Morus species (Morus alba L. and Morus nigra L.)", PLANT GROWTH REGULATION, KLUWER ACADEMIC PUBLISHERS, DO, vol. 44, no. 3, 1 November 2004 (2004-11-01), pages 251-256, XP019243571, ISSN: 1573-5087, DOI: 10.1007/S10725-004-4500-4

## Description

### Field of the invention

The present invention relates to an oil in water emulsified food composition comprising high oleic oil and a process for manufacturing the same. It further relates to the use of extract of *morus* to reduce the off-flavor formation in an oil-in-water emulsified food composition comprising high oleic oil.

### Background of the invention

Oil-in-water emulsions, such as mayonnaise, are prone to oxidation of the oil component. Especially in compositions with a relatively high oil level, the effects of such oil oxidation become more pronounced and may involve change in color and rancidity taste. A means to counter this development is the addition of ethylenediaminetetraacetic acid (EDTA).

EDTA is considered an undesired ingredient in food compositions, as it can be perceived by some consumers as an unnatural or unhealthy chemical. There is a desire to omit EDTA from food compositions such as mayonnaise, while maintaining the fresh taste character. For example, EP3459365A1 relates to a composition comprising water and vegetable oil and a defined apple cider vinegar to reduce oxidation.

When oils with a higher oleic acid fraction, i.e. which comprise a relatively higher level of oleic acid compared to the normal oil variant, an increased oil oxidative stability is achieved, as for example observed by the reduced oxygen consumption overtime, which can be even comparable to when EDTA was used. The use of these oils comprising a high oleic acid fraction is however attended with a specific problem of its own. After a short period of storage, normally less than a month, a specific unpleasant off-taste is developed, which significantly reduced the acceptance of the oil-in-water emulsified food composition.

Emulsified products comprising a high level of oil containing high oleic fatty acids (high oleic oils) are known. The off taste is taken for granted or masked by flavor additions.

### Summary of the invention

A need remains for an oil-in-water emulsion that is stable against oxidation while not relying on EDTA, and wherein no off-taste is developed during storage, at least wherein the off taste is reduced.

Surprisingly, this challenge was met by an oil-in-water emulsified food composition comprising:
- Water,
- Vegetable oil, comprising C18:1 and C18:2 fatty acids in an amount, based on the weight of the vegetable oil, of:
   ∘C18:1 from 35 to 95 wt%, preferably from 40 to 90 wt%,
   ∘C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil.
- Extract of *morus alba.*

In a further aspect, the invention relates to a method to produce the composition of the invention, the method comprising the steps of:
a. Providing a water phase comprising water,
b. Providing an oil phase comprising vegetable oil comprising C18:1 and C18:2 fatty acids, in an amount, based on the weight of the vegetable oil, of:
   - C18:1 from 35 to 95 wt%, preferably from 40 to 90 wt%,
   - C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil, and
   wherein the water phase, the oil phase or both further comprise extract of *morus alba,*
c. Mixing the oil phase and the water phase to provide an emulsified food product.

In a further aspect, the invention relates to the use of extract of *morus alba* in an amount of from 0.01 to 2 wt%, preferably of from 0.02 to 1.5 wt%, more preferably of from 0.05 to 1, even more preferably of from 0.1 to 0.5 wt% to reduce off-taste in an oil-in-water emulsified food composition, preferably a mayonnaise, salad dressing or vinaigrette, the emulsion comprising vegetable oil, and water, wherein the vegetable oil comprises C18:1 and C18:2 fatty acids, in an amount, based on the weight of the vegetable oil, of:
- C18:1 from 35 to 95 wt%, preferably from 40 to 90 wt%,
- C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil.

### Detailed description of the invention

All percentages, unless otherwise stated, refer to the percentage by weight (wt%). "Weight ratio" means that the concentration of a first (class of) compound(s) is divided by the concentration of a second (class of) compound(s), and multiplied by 100 in order to arrive at a percentage.

"Spoonable" means that a composition is semi-solid but not free-flowing on a time scale typical for eating a meal, meaning not free-flowing within a time period of an hour. A sample of such substance is able to be dipped with a spoon from a container containing the composition.

Except in the operating and comparative examples, or where otherwise explicitly indicated, all numbers in this description indicating amounts or ratios of material or conditions of reaction, physical properties of materials and/or use are to be understood as modified by the word "about".

Features described in the context of one aspect of the invention can be applied in another aspect of the invention.

The invention provides a food product as defined in the first aspect above.

### Emulsion

The composition of the invention is in the form of an oil-in-water emulsion. Examples of oil-in-water emulsions encompassed by the present invention include emulsified sauces, such as mayonnaise, and dressings, such as salad dressings and vinaigrettes. Preferably, the food composition is an emulsified sauce or dressing, preferably a mayonnaise or salad dressing and most preferably is a mayonnaise. Generally, a mayonnaise is spoonable, while a salad dressing is pourable.

In the context of the present invention, the preferred oil-in-water emulsion may be stable as an emulsion during a time period of for example less than one hour (like for example some vinaigrettes). It is preferred that (after emulsifying) the emulsion is stable for more than one hour, preferably during a time period of half a year or more (like for example some mayonnaises).

Mayonnaise is generally known as a thick, creamy sauce that can be used as a condiment with other foods. Mayonnaise is a stable water-continuous emulsion of typically vegetable oil, egg yolk and either vinegar or lemon juice. In many countries the term mayonnaise may only be used in case the emulsion conforms to the "standard of identity", which defines the composition of a mayonnaise. For example, the standard of identity may define a minimum oil level, and a minimum egg yolk amount. Also, mayonnaise-like products having oil levels lower than defined in a standard of identity or not containing egg yolk can be considered to be mayonnaises in the context of the present invention. This kind of products may contain thickeners like starch to stabilise the aqueous phase. Mayonnaises may vary in colour, and are generally white, cream-coloured, or pale yellow. The texture may range from light creamy to thick. Generally, mayonnaise is spoonable. In the context of the present invention "mayonnaise" includes such mayonnaise and 'mayonnaise-like' emulsions with vegetable oil levels ranging from 5% to 85% by weight of the product. Mayonnaises in the context of the present invention do not necessarily need to conform to a standard of identity in any country.

### Oil

The term "oil" as used herein refers to lipids selected from triglycerides, diglycerides, monoglycerides and combinations thereof. The term "vegetable oil" is not limited to one specific oil, but can comprise one or more specific oils. Preferably the oil in the context of this invention, the vegetable oil, comprises at least 90 wt% of triglycerides, more preferably at least 95 wt%. Preferably the oil contains less than 20 wt% of solid fat at 5°C, preferably less than 10 wt% solid fat. More preferred the oil is free from solid fat at 5°C. Most preferred the oil is liquid at 5°C. Preferred oils for use in the context of this invention are vegetable oils which are liquid at 5°C. In the context of this invention, algae oil is considered a vegetable oil. Preferably the vegetable oil comprises sunflower oil, rapeseed oil, soybean oil, algae oil, and combinations of these oils. Most preferably, the vegetable oil is selected from soybean oil, sunflower seed oil, rape seed oil and mixtures thereof. Therefore, preferably the vegetable oil is an edible oil. The oil preferably comprises monounsaturated and/or polyunsaturated fatty acids. The monounsaturated fatty acids as comprised in the oil preferably comprise oleic acid. The polyunsaturated fatty acids as comprised in the oil preferably comprise linoleic acid and linolenic acid.

The amount of saturated fatty acids could preferably be from 2 to 15 wt%, more preferably of from 3 to 12 wt%, even more preferably of from 5 to 11 wt% based on the total weight of the vegetable oil. It can be preferred to be less than 15 wt%, more preferably less than 12 wt%, even more preferably less than 11 wt%, even more preferably less than 10 wt%, based on the total weight of the vegetable oil. The amount could be preferably more than 2 wt%, more preferably more than 3 wt%, even more preferably more than 5 wt%, based on the total weight of the vegetable oil.

Preferably the amount of olive oil in the composition of the invention is maximally 40% by weight of the composition. More preferably the amount of olive oil in the composition of the invention is maximally 20% by weight of the composition, more preferred maximally 15% by weight of the composition. Preferably the amount of olive oil in the composition of the invention is maximally 20% by weight of the composition, more preferred maximally 15% by weight of the composition more preferred maximally 10% by weight of the composition. It may be preferred, that the vegetable oil does not comprise olive oil.

Preferably the concentration of vegetable oil ranges from 5 to 85 wt%, preferably from 10% to 80% by weight, more preferably of from 10 to 78 wt%, even more preferably of from 15 to 75 wt%, even more preferably 25 to 70 wt%, based on the weight of the composition. Preferably the amount of vegetable oil is at least 5 wt%, more preferably at least 15% by weight, preferably at least 25% by weight. Preferably the concentration of vegetable oil is maximally 80 wt%, more preferably at most 78 wt% even more preferably at most 75% by weight, preferably maximally 70% by weight. Any combination of ranges using these mentioned end points are considered to be part of the invention as well.

### High oleic oil

In the context of the present invention, vegetable oil is used which comprises fatty acids with one (C18:1) unsaturated carbon atom and fatty acids with two (C18:2) unsaturated carbon atoms. It is preferred that fatty acids are present with three (C18:3) unsaturated carbon atoms. C18:1 and C18:2 fatty acids are present in the following amounts, based on the weight of the total amount of vegetable oil:
- C18:1 from 35 to 95 wt%, preferably from 40 to 90 wt%,
- C18:2 from 1 to 50 wt%, preferably of from 5 to 45 wt%.

If C18:3 fatty acids are present, they are present in an amount, based on the weight of the total amount of vegetable oil, of preferably less than 9 wt%, more preferably less than 8 wt%, even more preferably less than 7 wt%, even more preferably less than 6 wt%, even more preferably less than 5 wt%, based on the weight of the vegetable oil. It is preferred that the C18:3 fatty acid is present in an amount of more than 0.05 wt%, more preferably of more than 0.1 wt%, even more preferably of more than 0.2 wt%, even more preferably more than 0.5 wt%, and still even more preferably of more than 1 wt%, based on the weight of the vegetable oil. Preferably C18:3 fatty acid is present in an amount of from 0 to 9 wt%, preferably of from 0.05 to 8 wt%, even more preferably of from 0.1 to 7 wt%, even more preferably of from 0.2 to 6 wt%, even more preferably of from 0.5 to 5 wt%, based on the weight of the vegetable oil.

The total amount of mono-, di- and tri-unsaturated C18 fatty acid (i.e. C18:1, C18:2 and 18:3) is preferably from 75 to 96 wt%, more preferably of from 80 to 95 wt%, even more preferably of from 85 to 93 wt% based on the total weight of the vegetable oil.

It is preferred, that the total vegetable oil in the composition according to the invention comprises from 1 to 50 wt%, more preferably of from 5 to 48 wt%, even more preferably of from 7 to 45 wt% C18:2 and C18:3 (combined), based on the total weight of the vegetable oil.

The total vegetable oil in the composition comprises C18:1 fatty acids which are preferably present in an amount of more than 35 wt%, more preferably more than 45 wt%, even more preferably more than 50 wt%, even more preferably more than 60 wt%. The total oil in the composition of the invention preferably comprises less than 95 wt%, more preferably less than 90 wt%, even more preferably less than 85 wt%, even more preferably less than 80 wt%, even more preferably less than 75 wt% of C18:1 fatty acid, based on the weight of the vegetable oil. C18:1 fatty acid is preferably present in an amount of from 35 to 95 wt%, preferably 40 to 90 wt%, most preferably 45 wt% to 85 wt%, or even 50 to 75 wt%, based on the weight of the vegetable oil.

The total vegetable oil in the composition comprises C18:2, which is preferably present in an amount of from 1 wt% to 50 wt%, preferably from 5 to 45 wt%, based on the weight of the vegetable oil.

It may be preferred that the composition comprises C18:1 in an amount of from 40 to 90 wt% and C18:2 fatty acid in an amount of from 5 to 45 wt%, based on the weight of the vegetable oil. It may be preferred that the composition comprises C18:1 in an amount of from 40 to 90 wt% and C18:2 fatty acid in an amount of from 5 to 45 wt%, and C18:3 in an amount of 0.05 to 8 wt%, based on the weight of the vegetable oil. The vegetable oil in the invention may be a high oleic oil or may comprise high oleic oil.

High oleic oil is defined as oil with a very high content of oleic acid (C18:1). Oleic acid is a monounsaturated omega-9 fatty acid. It is preferred that the vegetable oil contains more than 70 wt% of oleic acid in its fatty acid composition, preferably more than 75 wt%. The vegetable oil comprises a high oleic oil, defined as an oil wherein the fatty acid composition comprises more than 70 wt% of oleic acid, based on the weight of the high oleic oil. Not all vegetable oil needs to be a high oleic oil. It may be preferred, that the vegetable oil further comprises oil which is not a high oleic oil. High oleic oil is preferably present in the composition of the invention in an

amount of from 20 wt% to 100 wt%, preferably of from 20 to 80 wt%, more preferably of from 50 to 80 wt% based on the weight of the total vegetable oil in the composition. High oleic oil is preferably present in an amount of more than 25 wt% based, more preferably more than 40 wt% on the weight of the composition.

Such a high oleic oil preferably is high oleic sunflower oil, high oleic rapeseed oil, high oleic soybean oil, high oleic algae oil, or a mixture thereof.

### Water

The composition of the invention comprises water. The total amount of water is preferably of from 15 to 95 wt%, preferably of from 17 to 90 wt%. It can be preferred that water is present in an amount of from 20 to 85 wt%, preferably in an amount of from 22 to 80 wt%. Preferably the amount of water is at least 15 wt%, more preferably at least 17% by weight, even more preferably at least 20%, more preferably at least 22 wt%, even more preferably at least 40 wt% or even 55 wt% by weight. Preferably the concentration of water is maximally 95 wt%, more preferably at most 90 wt%, even more preferably at most 85 wt% more preferably at most 80 wt% even more preferably at most more 75 wt%. Any combination of ranges using these mentioned end points are considered to be part of the invention as well.

### Emulsifier

Preferably the composition of the invention comprises an oil-in-water emulsifier. The emulsifier serves to disperse oil droplets in the continuous aqueous phase of an oil-in-water emulsion. Preferably the emulsifier comprises an oil-in-water emulsifier originating from egg, preferably from egg yolk. Preferably the composition comprises egg yolk. This suitably serves as an ingredient which also provides the oil-in-water emulsifier. The presence of egg yolk may be beneficial for taste, emulsification and/or stability of the oil droplets in the composition of the invention. Egg yolk contains phospholipids, which act as emulsifier for the oil droplets.

Preferably the concentration of egg yolk in the composition of the invention ranges from 1% to 10% by weight of the composition, more preferred from 2% to 8% by weight of the composition, even more preferably from 2.5% to 6% by weight of the composition. The egg yolk may be added as egg yolk component, meaning largely without egg white. Alternatively, the composition may also contain whole egg, containing both egg white and egg yolk. The total amount of egg yolk in the composition of the invention includes egg yolk that may be present as part of whole egg. Preferably the concentration of phospholipids originating from egg yolk ranges from 0.08% to 0.8% by weight, preferably from 0.2% to 0.5% by weight of the food product.

Alternatively, or in addition to the egg-derived emulsifier, the composition of the invention may comprise an oil-in-water emulsifier that does not originate from egg or egg yolk. Preferably such oil-in-water emulsifier is from plant or botanical origin, and may be used native or modified. This way a vegan oil-in-water emulsifier can be created without ingredients from animal origin. Preferably the oil-in-water emulsifier comprises starch sodium octenyl succinate (European food additive E1450). This emulsifier is available commercially as for example N-creamer 46, ex Ingredion Inc. (Westchester, IL, USA). Another preferred emulsifier from botanical origin is legume protein.

### Acid and pH

The composition of the invention preferably has a pH ranging from 2.5 to 5, preferably ranging from 2.5 to 4.

The composition preferably comprises an acid. Preferably the acid comprises organic acid. More preferably, the acid is organic acid. Preferably, the organic acid comprises an acid selected from the group consisting of acetic acid, citric acid, malic acid, lactic acid, succinic acid, formic acid, propionic acid, ascorbic acid, salts thereof and mixtures thereof. Preferably the acid is selected from the group consisting of acetic acid, citric acid, malic acid, lactic acid, succinic acid, salts thereof and mixtures thereof. It is more preferred that the composition comprises acetic acid and salts thereof. Preferably the composition of the invention has a total titratable acidity ranging from 0.03% to 3% by weight expressed as acetic acid, preferably from 0.05% to 2% by weight, preferably from 0.1% to 1% by weight. Acetic acid is preferably present in an amount of more than 50 wt%, more preferably more than 80 wt%, even more preferably more than 90 wt%, even more preferably more than 95 wt% based on the weight of the total amount of acid in the composition.

It can be preferred that the composition comprises acetic acid and one or more acids selected from the group consisting of citric acid, malic acid, lactic acid, succinic acid and mixtures thereof.

The acids as described in this specification include their corresponding salts which are in equilibrium with the acids (acetates, citrates, malates, lactates, succinates, etc.). In case a concentration of an acid is provided, then this concentration refers to total concentration of the acid and its corresponding salt.

### Mulberry extract

The oil-in-water emulsified food composition of the present invention comprises *Morus alba* extract, preferably in an amount of from 0.01 to 2%, more preferably comprises from 0.02 to 1.5 %, more preferably comprises from 0.05 to 1%, even more preferably from 0.07 to 0.7%, even more preferably of from 0.1 to 0.5 %, expressed as dry weight of the extract based on the weight of the emulsified food composition. The term *'Morus alba* extract' as used herein refers to a composition that has been isolated from *Morus alba* extract fruit, leave or root. Typically, the *Morus alba* extract does not contain insoluble parts such as seeds or peel. Mulberry extract, and in particular *Morus alba extract,* is defined as the extract as such. For example, without additional processing aids such as for example maltodextrins or sugars.

Mulberry, *Morus,* is a genus of flowering plants in the family Moraceae, and comprises ten to sixteen species of deciduous trees commonly known as mulberries, growing wild and under cultivation in many temperate world regions. The following species are accepted by the Kew Plant List as of August 2015: *Morus alba L., Morus australis Poir., Morus cathayana Hemsl., Morus celtidifolia Kunth, Morus indica* - *L., Morus insignis, Morus japonica Audib., Morus liboensis S.S. Chang, Morus macroura Miq., Morus mesozygia Stapf, Morus mongolica (Bureau) C.K. Schneid., Morus nigra L., Morus notabilis C.K. Schneid., Morus rubra L., Morus serrata Roxb., Morus trilobata (S.S. Chang), Morus wittiorum Hand.-Mazz.*

The mulberry extract in the emulsified food composition of the invention (the *Morus alba* extract) is preferably selected from extract of fruit, leaves, root and combinations thereof, preferably the *Morus alba* extract is *Morus alba* fruit extract. *Morus alba* extract is preferably applied in dried form, more preferably in dried, ground form. The *Morus alba* extract that is employed in accordance with the present invention can be a solid product, a paste or a liquid. Preferably, the *Morus alba* extract is a dry solid product, preferably a powder.

In the present invention, the preferred *Morus alba* extract extract is a *Morus alba* fruit extract. It may be preferred that the extract is an aqueous *Morus alba* fruit extract, more preferably the extract is a dried extract obtained from an aqueous *Morus alba* fruit extract.

Preferably at least 80 wt.% of the dry matter of the *Morus alba* extract, preferably obtained from an aqueous *Morus alba* extract, preferably of a *Morus alba* fruit extract, dissolves when the material is added to demineralized water at a temperature of 20°C in a concentration providing 20 gram of dry matter per litre. The *Morus alba* extract is preferably a dried aqueous extract of mulberry fruit.

Preferably, the *Morus alba* extract has a water content of less than 15 wt.%, more preferably of less than 10 wt.% and most preferably of less than 8 wt.%.

A dried mulberry extract, preferably a mulberry fruit extract, obtained from an aqueous mulberry extract, or mulberry fruit extract respectively, which can be used in accordance with the present invention, may suitably be obtained as follows: dried mulberry fruit, root or leave, preferably fruit, is sliced, extracted with water, filtered and concentrated, and finally dried (e.g. by spray-drying) into fine powder. No excipient needs to be used during such spray-drying process, resulting in a final product with a dried mulberry material to dried extract ratio of e.g. 10:1.

The mulberry extract that is employed in accordance with the present invention preferably has the following dry matter composition:
- 10-40 wt.% amino acids (including amino acid residues contained in peptides and proteins);
- 7-28 wt.% organic compounds with an acidic function other than amino acids;
- 11-44 wt.% carbohydrates.

To this end, the composition of the invention preferably contains DNA and/or RNA of *Morus alba.*

In the composition of the invention the mulberry extract is preferably dissolved in the water.

The total amount of polyphenols in the mulberry extract is preferably more than 0.6 GAE% ("gallic acid equivalents"), more preferably more than 1 GAE%, based on the dry weight of the mulberry extract. Preferably, from 0.6 GAE% to 15 GAE%, more preferably from 1 to 15 GAE%, more preferably from 0.6 to 10 GAE%, even more preferably of from 0.6 to 6 GAE%, more preferably from 1.5 to 6 GAE%, even more preferably of from 2 to 4 GAE%. A common method to determine the phenolic compounds concentration of a sample, is the concentration in "gallic acid equivalents" (GAE). Whenever reference is made herein to "gallic acid equivalents" what is meant is the amount of gallic acid equivalents as determined by the Folin-Ciocalteu assay, as known in the art. Gallic acid (3,4,5-trihydroxybenzoic acid) is the phenolic acid that is used as a standard for determining the phenol content of various analyses by the Folin-Ciocalteu assay (see V.L. Singleton et al., Analysis of total phenols and other oxidation substrates and antioxidants by means of Folin-Ciocalteu reagent, Methods in Enzymology 299, 152-178, 1999).

The mulberry extract as used in the composition of the invention preferably comprises total free amino acids in an amount of more than 3 mg/g, based on the dry weight of the extract. Preferably from 3 to 150 mg/g, even more preferably of from 50 to 120 mg/g, even more preferably of from 70 to 100 mg/g, even more preferably of from 80 to 100 mg/g, based on the dry weight of the extract.

The mulberry extract as used in the composition of the invention preferably comprises organic acids in a total amount of from 17 to 200 mg/g, preferably of from 40 to 200 mg/g, preferably from 80 to 180, even more preferably of from 120 to 160 mg/g based on the dry weight of the extract. Organic acid is understood here as acetic acid, citric acid, malic acid, lactic acid, succinic acid, formic acid, propionic acid, ascorbic acid, salts thereof, and mixtures thereof. It is particularly preferred, when the extract of *Morus alba* comprises organic acids in a total amount of from 17 to 200 mg/g, preferably of from 40 to 200 mg/g, preferably from 80 to 180, even more preferably of from 120 to 160 mg/g based on the dry weight of the extract and from 0.6 to 15 GAE%, more preferably from 1 to 15 GAE%, even more preferably from 0.6 to 10 GAE%, even more preferably of from 0.6 to 6 GAE%, more preferably of from 1.5 to 6 GAE%, even more preferably of from 2 to 4 GAE%, based on the dry weight of the *Morus alba* extract.

The mulberry extract as used in the composition of the invention preferably comprises citric acid and salts thereof in an amount of more than 20 wt%, based on the weight of total organic acids in the extract. A most preferred amount is from 65 to 85 wt% based on the weight of total organic acids in the extract. Organic acid is understood here as acetic acid, citric acid, malic acid, lactic acid, succinic acid, formic acid, propionic acid, ascorbic acid, salts thereof and mixtures thereof.

The mulberry extract as used in the composition of the invention preferably comprises from 1 to 100, preferably from 40 to 60 mg/g of quinic acid and salts thereof, based on the dry weight of the *Morus alba* extract.

Amounts of total amino acids, organic acids, citric and quinic acid can for example be determined by NMR analysis, as known in the art, and specified in the example section herein.

Color variations are not appreciated by some consumers. It is a preference, and a preferred advantage of the invention, that the food composition has a color that is not too different from the color of the product without mulberry extract. Color can be measured as known in the art according to a CIE L*a*b* scale. In particular, compositions are preferred having a L*a*b* color value of the *Morus alba* extract, measured at 0.1% of the extract in water, wherein the L* value of a 0.1 wt% aqueous solution of the extract is higher than 80, preferably from 80 to 92, more preferably is from 88 to 90. The b* value is preferably more than 1, preferably of between 1 and 30, even more preferably of between 2 and 20, most preferably of between 4 and 12. Such L* values and b* values, preferably the combination of such L* and b* values of the extract provide food compositions according to the invention, especially mayonnaise compositions, which most resemble, with respect to color, the food compositions without the *Morus alba* extract.

L* for mayonnaise compositions according to the invention is preferably of from 50 to 95, preferably of from 70 to 95, even more preferably of from 80 to 92, most preferably of from 85 to 92. The difference in color ΔE between the colour of a composition with and without the *Morus alba* extract is calculated as follows *ΔE** = *SQRT(ΔL***²*+ *Δa***²* + *Δb***²*)*.* The difference in color ΔE between a composition with and without the *Morus alba* extract, calculated as *ΔE** = *SQRT(ΔL***²* + *Δa***²* + *Δb***²*) is preferably of from 0 to 30, more preferably of from 0 to 20, even more preferably of from 0 to 10 and most preferably of from 0 to 5. These maximum differences in color ΔE are especially desired and preferred if the product is a mayonnaise or a salad dressing, but are not limited to these types of food product.

Hence, preferably the *Morus alba* extract comprises
- total polyphenols in an amount of from 0.6 to 15 GAE%, preferably of from 1 to 15 GAE%, even more preferably of from 1 to 10 GAE%, even more preferably of from 1.5 to 6 GAE%, most preferably of from 2 to 4 GAE%, based on the dry weight of the *Morus alba* extract
- total free amino acids in an amount of from 3 to 150 mg/g, even more preferably of from 50 to 120 mg/g, even more preferably of from 70 to 100 mg/g, even more preferably of from 80 to 100 mg/g, based on the dry weight of the *Morus alba* extract.
- total organic acids in an amount of from 17 to 200 mg/g, preferably of from 40 to 200 mg/g, preferably of from 80 to 180 mg/g more preferably of from 120 to 160 mg/g, based on the dry weight of the *Morus alba* extract, wherein organic acid is understood here as acetic acid, citric acid, malic acid, lactic acid, succinic acid, formic acid propionic acid, ascorbic acid, salts thereof and mixtures thereof, and
wherein the *Morus alba* extract has an L*a*b* value when measured in a 0.1 wt% aqueous solution wherein the L* value is higher than 80, preferably from 80 to 92, more preferably is from 88 to 90 and the b* value is preferably more than 1, preferably of between 1 and 30, even more preferably of between 4 and 12. In this extract it is preferred that quinic acid is present in an amount of from 1 to 100, preferably from 40 to 60 mg/g and salts thereof based on the dry weight of the *Morus alba* extract.

### Other ingredients

The composition of the invention preferably contains additionally other ingredients than already specifically mentioned in here. Preferably the composition contains plant material in the form of herbs and/or spices. In case such ingredients are present in the composition, then generally their total concentration is at least 0.1% by weight, and preferably maximally 10% by weight, preferably maximally 5% by weight.

The composition of the invention may comprise sugar, but high levels are not desired. Sugar may be present to an amount of from 0.1 to 15 wt%, preferably of from 0.3 to 12 wt%, even more preferably of from 0.4 to 10 wt%, most preferably of from 0.5 to 8 wt%, based on the weight of the composition.

Total alkaline metal salt, for example sodium chloride, may be present to an extent of from 0.1 to 5 wt%, preferably from 0.15 to 4 wt%, or more preferably of from 0.2 to 3 wt%, based on the weight of the composition.

The food composition of the invention may comprise a thickener. It may be preferred that the food composition comprises a thickener such as a hydrocolloid thickener. Therefore, the food composition may preferably comprise starch or gum or mixtures thereof. A preferred gum is xanthan gum. The composition may comprise starch in an amount of from 0.1 to 8 wt%, preferably of from 0.2 to 7 wt%, more preferably of from 0.5 to 6 wt%, or even from 0.5 to 5 wt% can be preferred, based on the weight of the food product. It is preferred, that when starch is present, or gum, the oil content is between 5 and 72 wt%, preferably of between 8 and 70 wt%, preferably of between 10 and 60 wt% based on the weight of the food product.

The amount of EDTA which commonly is present in compositions containing vegetable oil can be strongly reduced. Hence, preferably the composition comprises EDTA at a concentration lower than 0.008 wt%, preferably from 0 to 0.007 % by weight, preferably lower than 0.005% by weight, preferably from 0 to 0.005 wt%, preferably lower than 0.002% by weight, preferably from 0 to 0.002 wt% preferably lower than 0.001% by weight, preferably from 0 to 0.001 wt% of the composition. Most preferred EDTA is absent from the composition.

### Method for preparation of composition

The compositions of the invention are prepared by any method commonly known for preparing oil-in-water emulsions. Preferably, by using such method, an oil-in-water emulsion is prepared, wherein the oil droplets have a surface weighted mean diameter D3,3 of less than 10 micrometer (see M. Alderliesten, Particle & Particle Systems Characterization 8 (1991) 237-241; for definitions of average diameters).

Accordingly, in a second aspect the present invention provides a method for making an emulsified food composition according to the first aspect of the invention. Preferred compounds and amounts indicated in the first aspect of the invention apply for this aspect as well. The method comprises the steps of:
a. Providing a water phase comprising water,
b. Providing an oil phase comprising vegetable oil comprising C18:1 and C18:2 oleic acids, in an amount, based on the weight of the total vegetable oil, of:
   - C18:1 from 35 to 95 wt%, preferably from 40 to 90 wt%,
   - C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil.
   wherein the water phase, the oil phase or both further comprise extract of *morus alba,*
c. Mixing the oil and the water phase to provide an emulsified food composition.

The method of the invention comprising mixing, preferably homogenisation, of a mixture of oil and water. This results in an oil-in-water emulsion. Technology to prepare oil-in-water emulsions is known in the art, e.g. for mayonnaise making. Preferably, water and water-soluble ingredients are provided in step a). Acid can be pre-added to the water in step a).

Acid can be added as such or, preferably, in the form of vinegar. The water in the composition encompasses the water present in the vinegar, as the amount of water refers to the total water content of the resulting composition. Vinegar is preferably added, and preferably present in the composition, in an amount of from 1 to 20 wt%, based on the weight of the composition.

The mulberry (*Morus alba*) extract can be added to the water in step a), to the oil phase in step b) or to both the water phase and the oil phase in steps a) and b), respectively. It is preferred that the extract of *morus alba* is added to the water phase is in step a). The extract of *morus alba* can be pre-added to vinegar, if so desired, before adding to the water phase.

This water phase is combined with oil in step b). Oil is preferably added as high-oleic oil, as described above in relation to the food composition. The vegetable oil can comprise, or preferably, can consist of high oleic oil, as long as the total fatty acid composition of the resulting vegetable oil meets the requirements as claimed in terms of C18:1 and C18:2, and preferably, C18:3 fatty acids. The amount of high oleic oil that is preferably added is as described above in the context of the food composition, *i.e.* the first aspect of the invention.

The water phase comprising water, preferably mulberry extract and preferably acid, is then mixed with the oil, preferably by homogenisation or another suitable emulsification process. A colloid mill could be used to achieve this. Preferably an oil-in-water emulsion results from such mixing, e.g. by homogenisation. In the emulsion, the oil droplets preferably have a volume weighted mean droplet size D3,3 of less than 10 micrometer. The amount of *Morus alba* extract is as described for the composition above, and preferably ranges from 0.01 to 2 wt%, preferably 0.02 to 1.5 wt%, more preferably of from 0.05 to 1 wt%, more preferably of from 0.07 to 0.7 wt%, even more preferably of from 0.1 to 0.5 wt% (expressed as dry weight of *Morus alba* extract, based on weight of final resulting composition).

Extract of *Morus alba* is preferably added as a powder, more preferably a powder which has a moisture content of less than 15 wt.%, more preferably of less than 10 wt.% and most preferably of less than 8 wt.%. The powder is preferably dried powder, more preferably is freeze dried powder. If the powder is freeze dried, it preferably has a moisture content of less than 5 wt%.

It is preferred, when in step a) or b) an emulsifier is included, especially in case an emulsion is prepared. The emulsifier is preferably as described above in relation to the product description.

### Use

In a third aspect, the present invention relates to the use of extract of *morus alba* in an amount of from 0.01 to 2 wt%, preferably of from 0.02 to 1.5 wt%, more preferably of from 0.05 to 1 wt%, even more preferably of from 0.1 to 0.5 wt% to reduce off-taste in an oil-in-water emulsified food composition, preferably a mayonnaise, salad dressing or vinaigrette, the emulsion comprising vegetable oil and water, wherein the vegetable oil comprises C18:1 and C18:2 fatty acids, in an amount, based on the weight of the total vegetable oil, of:
- C18:1 from 35 to 95 wt%, preferably from 45 to 90 wt%,
- C18:2 from 1 to 50 wt%, preferably of from 1.5 to 45 w%, wherein the vegetable oil comprises a high oleic oil, which is defined as an oil wherein the fatty acid composition comprises more than 70 wt% of oleic acid, based on the weight of the high oleic oil.

The invention will now be exemplified by the following, examples:**Examples**:

### Materials

| Water | Demineralized water |
|---|---|
| Rapeseed Oil | Rapeseed oil ex Cargill (Amsterdam, The Netherlands) |
| High Oleic Sunflower Oil | High oleic sunflower oil (C. Thywissen GmbH, Neuss, Germany) |
| Sugar | Sucrose white sugar W4 ex Suiker Unie (Oud Gastel, The Netherlands) |
| Salt | Sodium chloride Suprasel ex Akzo Nobel (Amesfoort, The Netherlands) |
| Spirit vinegar (12%) | Vinegar spirit 12% ex Kühne (Hamburg, Germany) |
| Egg yolk | Egg yolk ex Bouwhuis Enthoven (Raalte, The Netherlands); contains 92% egg yolk and 8% kitchen salt |
| Flavours | Natural flavour mix |
| Mulberry fruit extract | Mulberry fruit extract (Morus Alba) ex Draco Natural Products Inc. (California, US) |
| Lactic Acid 80% | Lactic acid (80%) PURAC FCC 80 ex Corbion, Gorinchem, the Netherlands |
| EDTA | Calcium Disodium EDTA ex Brenntag Nederland B.V., Dordrecht, the Netherlands |

| Fatty acid composition of the oils used in the examples | | | |
|---|---|---|---|
| | | High oleic sunflower oil | Rapeseed oil |
| C18:1 | % | 80.1 | 62.3 |
| C18:2 | % | 10.7 | 19.3 |
| C18:3 | % | 0.2 | 8.1 |

### Samples

| | control | Mayonnaise 1 | Mayonnaise 2 | Mayonnaise 3 |
|---|---|---|---|---|
| | 100% Rapeseed Oil + EDTA | 100% Rapeseed Oil | 100% High Oleic Oil (sunflower) | 100% High Oleic Oil (sunflower) + mulberry extract |
| Water | 15.59 | 15.60 | 15.60 | 15.35 |
| Rapeseed Oil | 75.00 | 75.00 | 0.00 | 0.00 |
| High Oleic Sunflower Oil | 0.00 | 0.00 | 75.00 | 75.00 |
| Sucrose | 1.30 | 1.30 | 1.30 | 1.30 |
| Sodium chloride | 1.00 | 1.00 | 1.00 | 1.00 |
| Spirit vinegar (12%) | 2.60 | 2.60 | 2.60 | 2.60 |
| Egg yolk | 4.20 | 4.20 | 4.20 | 4.20 |
| Flavours | 0.30 | 0.30 | 0.30 | 0.30 |
| Mulberry fruit extract | 0 | 0 | 0 | 0.25 |
| EDTA | 0.0075 | 0 | 0 | 0 |

The pH was balanced to 3.8 with lactic acid.

### Example 1

| | Headspace oxygen content [%] | | | |
|---|---|---|---|---|
| | control | Mayonnaise 1 Comparative | Mayonnaise 2 Comparative | Mayonnaise 3 Invention |
| Storage time at 50°C [days] | 100% Rapeseed Oil + EDTA | 100% Rapeseed Oil | 100% High Oleic Oil (sunflower) | 100% High Oleic oil + Mulberry extract |
| 0 | 21.2 | 21.1 | 21.4 | 21.8 |
| 2 | 20.9 | 19.1 | 20.5 | 21.0 |
| 5 | 20.3 | 16.9 | 19.3 | 20.4 |
| 7 | 20.5 | 16.4 | 19.2 | 20.6 |
| 9 | 20.3 | 15.9 | 19.0 | 20.3 |
| 12 | 18.9 | 14.4 | 17.9 | 19.3 |
| 14 | 18.7 | 13.9 | 17.6 | 18.8 |
| 16 | 18.7 | 13.5 | 17.6 | 19.0 |
| 20 | 17.2 | 11.7 | 16.5 | 17.8 |
| 22 | 16.9 | 11.0 | 16.4 | 17.7 |
| 27 | 16.0 | 8.0 | 15.8 | 16.9 |
| 29 | 16.0 | 6.7 | 15.9 | 16.8 |
| 33 | 15.0 | 1.3 | 14.8 | 16.2 |

The example shows the relative oxidative stability of 3 mayonnaise samples produced with rapeseed oil, high oleic oil and high oleic oil with mulberry extract, and a control mayonnaise comprising EDTA. EDTA is the standard chelating chemical commonly used in commercial mayonnaise products to prevent oil oxidation, and used in this test as positive control. The shelf life of the mayonnaise samples was evaluated under accelerated conditions (50°C) for a period of 33 days.

The measurement of the headspace oxygen content is a well-established method to assess lipid oxidation in closed systems. In general, 1 g of sample is filled in a capped glass vial (20 mL). Oxygen content is determined by taking a sample of gas from the head space with a needle through the septum of the closed lid of the jar followed by measurement with a gas analyser. A lower oxygen content indicates a higher degree of oxidation.

After 33 days of storage, Mayonnaise 1 (where the oil phase is 100% rapeseed oil) is fully oxidized (the residual oxygen content in the headspace is below 2%). Mayonnaise 2 and 3 show a similar level of oxidation (still 14.8 and 16.2 % of oxygen left in the headspace, similar to the positive control with EDTA), reflecting the relatively small sensitivity of high oleic oil for oxidation, compared to rapeseed oil.

### Example 2

| | | Sensorial evaluation | | | |
|---|---|---|---|---|---|
| | Control (EDTA) | | Mayonnaise 1 Comparative | Mayonnaise 2 Comparative | Mayonnaise 3 Invention |
| Storage time at ambient | A | | 100% Rapeseed Oil | 100% High Oleic Oil (sunflower) | 100% High Oleic oil + Mulberry extract |
| 0 weeks | A | | A | A | A |
| 2 weeks | A | | NA | A | A |
| 4 weeks | A | | NA | B | A |
| 6 weeks | A | | NA | B | A |
| 8 weeks | A | | NA | B | A |
| 12 weeks | A | | NA | NA | A |
| 16 weeks | A | | NA | NA | B |

| | | | | | |
|---|---|---|---|---|---|
| A = Acceptable; B = Borderline; NA = Not Acceptable | | | | | |

The mayonnaise samples were evaluated sensorially by storing samples under non-accelerated conditions (ambient temperature) for a period of 16 weeks.

The overall quality of the mayonnaise samples was scored by an expert panel of 6 people as acceptable, borderline or not acceptable.

Already after 2 weeks of storage, Mayonnaise 1 (containing 100% rapeseed oil) was evaluated not acceptable by the expert panel. Mayonnaise 2 and 3, and the control with EDTA show similar high remaining levels of oxygen in the head space, *i.e.* relatively little oxidation, (compared to non-high oleic oil, 1.3%). Despite a similar level of oxygen in Mayonnaises 2 and 3, the taste of Mayonnaise 3 comprising the mulberry extract remains acceptable up to 16 weeks when the flavour becomes borderline (B). Without mulberry extract, the flavour becomes borderline already after 4 weeks, and after 8 weeks the taste is not acceptable anymore (mayonnaise 2).

### Conclusion

By the Examples it is shown, that by the use mulberry extract an acceptable mayonnaise composition could be made which shows significant oxidation reduction while showing an acceptable flavour profile (arising of off taste is significantly delayed) in shelf life time.

## Claims

1. An oil-in-water emulsified food composition comprising:
• Water,
• Vegetable oil, comprising C18:1 and C18:2 fatty acids, in an amount, based on the weight of the vegetable oil, of:
∘C18:1 from 35 to 95 wt%, preferably from 40 to 90 wt%,
∘C18:2 from 1 to 50 wt%, preferably of from 5 to 45 wt%,
wherein the vegetable oil comprises a high oleic oil, which is defined as an oil wherein the fatty acid composition comprises more than 70 wt% of oleic acid, based on the weight of the high oleic oil,
• Extract of *morus alba.*

2. Composition according to any one of the preceding claims, wherein the vegetable oil comprises less than 50% wt of C18:2 and C18:3 fatty acids taken together, based on the weight of the vegetable oil.

3. Composition according to any one of the preceding claims, wherein the vegetable oil comprises C18:3 in an amount of from 0.01 wt% to 9 wt%, based on the weight of the vegetable oil.

4. Composition according to any one of the preceding claims, wherein the vegetable oil comprises C18:1 in an amount of from 40 wt% to 90 wt%, and C18:2 is from 5 wt% to 45 wt%, based on the weight of the vegetable oil

5. Composition according to any one of the preceding claims, wherein the vegetable oil is present in a total amount of from 5 wt% to 85 wt%, preferably of from 10 to 80 wt%, more preferably of from 15 to 75 wt%, based on the weight of the composition.

6. Composition according to any one of the preceding claims, wherein the vegetable oil comprises an oil selected from the group consisting of sunflower oil, soybean oil, rapeseed oil, algae oil and mixtures thereof.

7. Composition according to any one of the preceding claims, wherein the vegetable oil further comprises oil which is not a high oleic oil, wherein high oleic oil is defined as an oil wherein the fatty acid composition comprises more than 70 wt% of oleic acid, based on the weight of the high oleic oil.

8. Composition according to any one of the preceding claims, wherein the high oleic oil is present in an amount of from 20 wt% to 100 wt%, preferably of from 20 to 80 wt% based on the weight of the total vegetable oil in the composition.

9. Composition according to any one of the preceding claims, wherein the high oleic oil is present in an amount of more than 25 wt% based on the weight of the composition.

10. Composition according to any one of the preceding claims, wherein saturated fatty acids are present in an amount of from 2 to 15 wt%, based on the weight of the total vegetable oil.

11. Composition according to anyone of the preceding claims, wherein the extract of *Morus alba* is present in an amount of from 0.01 to 2 wt%, expressed as dry weight of extract on weight of total food composition.

12. Composition according to any one of the preceding claims, wherein the extract of *Morus alba* comprises polyphenols in a total amount of from 0.6 to 15 gallic acid equivalents, GAE,%, preferably of 1 to 15 GAE %, based on the dry weight of the extract, and as determined by the Folin-Ciocalteu assay.

13. Process for manufacturing an oil-in-water emulsified food composition according to any one of the preceding claims,
the process comprising the steps of:
a. Providing a water phase comprising water,
b. Providing an oil phase comprising vegetable oil comprising C18:1 and C18:2 fatty acids, in an amount, based on the weight of the vegetable oil, of:
• C18:1 from 35 to 95 wt%, preferably from 40 to 90 wt%,
• C18:2 from 1 to 50 wt%, preferably of from 5 to 45 wt%,
wherein the vegetable oil comprises a high oleic oil, which is defined as an oil wherein the fatty acid composition comprises more than 70 wt% of oleic acid, based on the weight of the high oleic oil,
wherein the water phase, the oil phase or both further comprise extract of *morus alba,*
c. Mixing the oil and the water phase to provide an emulsified food composition.

14. Use of extract of *morus alba* in an amount of from 0.01 to 2 wt% to reduce off-taste in an oil-in-water emulsified food composition, wherein the emulsion comprises vegetable oil and water, wherein the vegetable oil comprises C18:1 and C18:2 fatty acids, in an amount, based on the weight of the vegetable oil, of:
• C18:1 from 35 to 95 wt%, preferably from 40 to 90 wt%,
• C18:2 from 1 to 50 wt%, preferably of from 5 to 45 wt%, wherein the vegetable oil comprises a high oleic oil, which is defined as an oil wherein the fatty acid composition comprises more than 70 wt% of oleic acid, based on the weight of the high oleic oil.

## Patentansprüche

1. Öl-in-Wasser-emulgierte Lebensmittelzusammensetzung, umfassend:
• Wasser,
• Pflanzenöl, umfassend C18:1- und C18:2-Fettsäuren in einer Menge, bezogen auf das Gewicht des Pflanzenöls, von:
∘C18:1 von 35 bis 95 Gew.-%, vorzugsweise von 40 bis 90 Gew.-%,
∘C18:2 von 1 bis 50 Gew.-%, vorzugsweise von 5 bis 45 Gew.-%, wobei das Pflanzenöl ein Öl mit hohem Ölsäuregehalt umfasst, das als Öl definiert ist, bei dem die Fettsäurezusammensetzung mehr als 70 Gew.-% Ölsäure, bezogen auf das Gewicht des Öls mit hohem Ölsäuregehalt, umfasst,
• Extrakt von Morus alba.

2. Zusammensetzung nach irgendeinem der vorhergehenden Ansprüche, wobei das Pflanzenöl weniger als 50 Gew.-% C18:2- und C18:3-Fettsäuren, zusammengenommen, bezogen auf das Gewicht des Pflanzenöls, umfasst.

3. Zusammensetzung nach irgendeinem der vorhergehenden Ansprüche, wobei das Pflanzenöl C18:3 in einer Menge von 0,01 Gew.-% bis 9 Gew.-%, bezogen auf das Gewicht des Pflanzenöls, umfasst.

4. Zusammensetzung nach irgendeinem der vorhergehenden Ansprüche, wobei das Pflanzenöl C18:1 in einer Menge von 40 Gew.-% bis 90 Gew.-% umfasst und C18:2 mit 5 Gew.-% bis 45 Gew.-%, bezogen auf das Gewicht des Pflanzenöls, vorliegt.

5. Zusammensetzung nach irgendeinem der vorhergehenden Ansprüche, wobei das Pflanzenöl in einer Gesamtmenge von 5 Gew.-% bis 85 Gew.-%, vorzugsweise von 10 bis 80 Gew.-%, bevorzugter von 15 bis 75 Gew.-%, bezogen auf das Gewicht der Zusammensetzung, vorliegt.

6. Zusammensetzung nach irgendeinem der vorhergehenden Ansprüche, wobei das Pflanzenöl ein Öl umfasst, ausgewählt aus der Gruppe, bestehend aus Sonnenblumenöl, Sojaöl, Rapsöl, Algenöl und Mischungen davon.

7. Zusammensetzung nach irgendeinem der vorhergehenden Ansprüche, wobei das Pflanzenöl ferner Öl umfasst, das kein Öl mit hohem Ölsäuregehalt ist, wobei das Öl mit hohem Ölgehalt als Öl definiert wird, bei dem die Fettsäurezusammensetzung mehr als 70 Gew.-% Ölsäure, bezogen auf das Gewicht des Öls mit hohem Ölsäuregehalt, umfasst.

8. Zusammensetzung nach irgendeinem der vorhergehenden Ansprüche, wobei das Öl mit hohem Ölsäuregehalt in einer Menge von 20 Gew.-% bis 100 Gew.-%, vorzugsweise von 20 bis 80 Gew.-%, bezogen auf das Gewicht des gesamten Pflanzenöls in der Zusammensetzung, vorliegt.

9. Zusammensetzung nach irgendeinem der vorhergehenden Ansprüche, wobei das Öl mit hohem Ölsäuregehalt in einer Menge von mehr als 25 Gew.-%, bezogen auf das Gewicht der Zusammensetzung, vorliegt.

10. Zusammensetzung nach irgendeinem der vorhergehenden Ansprüche, wobei gesättigte Fettsäuren in einer Menge von 2 bis 15 Gew.-%, bezogen auf das Gewicht des gesamten Pflanzenöls, vorliegen.

11. Zusammensetzung nach irgendeinem der vorhergehenden Ansprüche, wobei der Extrakt von *Morus alba* in einer Menge von 0,01 bis 2 Gew.-%, ausgedrückt als Trockengewicht des Extrakts, bezogen auf das Gewicht der gesamten Lebensmittelzusammensetzung, vorliegt

12. Zusammensetzung nach irgendeinem der vorhergehenden Ansprüche, wobei der Extrakt von *Morus alba* Polyphenole in einer Gesamtmenge von 0,6 bis 15 Gallussäureäquivalenten, GAE, %, vorzugsweise von 1 bis 15 GAE %, bezogen auf das Trockengewicht des Extrakts und bestimmt durch den Folin-Ciocalteu-Test, umfasst.

13. Verfahren zur Herstellung einer Öl-in-Wasser-emulgierten Lebensmittelzusammensetzung nach irgendeinem der vorhergehenden Ansprüche, wobei das Verfahren die Schritte umfasst:
a. Bereitstellen einer Wasserphase, umfassend Wasser,
b. Bereitstellen einer Ölphase, umfassend Pflanzenöl, umfassend C18:1- und C18:2-Fettsäuren, in einer Menge, bezogen auf das Gewicht des Pflanzenöls, von:
• C18:1 von 35 bis 95 Gew.-%, vorzugsweise von 40 bis 90 Gew.-%,
• C18:2 von 1 bis 50 Gew.-%, vorzugsweise von 5 bis 45 Gew.-%, wobei das Pflanzenöl ein Öl mit hohem Ölsäuregehalt umfasst, welches als Öl definiert ist, bei dem die Fettsäurezusammensetzung mehr als 70 Gew.-% Ölsäure, bezogen auf das Gewicht des Öls mit hohem Ölsäuregehalt, umfasst, wobei die Wasserphase, die Ölphase oder beide ferner einen Extrakt von *Morus alba* umfassen,
c. Mischen der ÖI- und der Wasserphase, um eine emulgierte Lebensmittelzusammensetzung bereitzustellen.

14. Verwendung von Extrakt von *Morus alba* in einer Menge von 0,01 bis 2 Gew.-%, um den Beigeschmack in einer ÖI-in-Wasser-emulgierten Lebensmittelzusammensetzung zu reduzieren, wobei die Emulsion Pflanzenöl und Wasser umfasst, wobei das Pflanzenöl C18:1- und C18:2-Fettsäuren in einer Menge, bezogen auf das Gewicht des Pflanzenöls von:
• C18:1 von 35 bis 95 Gew.-%, vorzugsweise von 40 bis 90 Gew.-%,
• C18:2 von 1 bis 50 Gew.-%, vorzugsweise von 5 bis 45 Gew.-%, umfasst, wobei das Pflanzenöl ein Öl mit hohem Ölsäuregehalt umfasst, welches als Öl definiert ist, bei dem die Fettsäurezusammensetzung mehr als 70 Gew.-% Ölsäure, bezogen auf das Gewicht des Öls mit hohem Ölsäuregehalt, umfasst.

## Revendications

1. Composition alimentaire émulsifiée huile-dans-eau comprenant :
• de l'eau,
• de l'huile végétale, comprenant des acides gras en C18:1 et C18:2, dans une quantité, sur la base de la masse de l'huile végétale, de :
∘ C18:1 de 35 à 95 % en masse, de préférence de 40 à 90 % en masse,
∘ C18:2 de 1 à 50 % en masse, de préférence de 5 à 45 % en masse,
dans laquelle l'huile végétale comprend une huile oléique élevée, qui est définie comme une huile dans laquelle la composition d'acide gras comprend plus de 70 % en masse d'acide oléique, sur la base de la masse de l'huile oléique élevée,
• un extrait de *morus alba.*

2. Composition selon l'une quelconque des revendications précédentes, dans laquelle l'huile végétale comprend moins de 50 % en masse d'acides gras C18:2 et C18:3 pris ensemble, sur la base de la masse de l'huile végétale.

3. Composition selon l'une quelconque des revendications précédentes, dans laquelle l'huile végétale comprend C18:3 dans une quantité de 0,01 % en masse à 9 % en masse, sur la base de la masse de l'huile végétale.

4. Composition selon l'une quelconque des revendications précédentes, dans laquelle l'huile végétale comprend C18:1 dans une quantité de 40 % en masse à 90 % en masse, et C18:2 est de 5 % en masse à 45 % en masse, sur la base de la masse de l'huile végétale.

5. Composition selon l'une quelconque des revendications précédentes, dans laquelle l'huile végétale est présente dans une quantité totale de 5 % en masse à 85 % en masse, de préférence de 10 à 80 % en masse, encore mieux de 15 à 75 % en masse, sur la base de la masse de la composition.

6. Composition selon l'une quelconque des revendications précédentes, dans laquelle l'huile végétale comprend une huile choisie dans le groupe consistant en huile de tournesol, huile de soja, huile de colza, huile d'algue et mélanges de celles-ci.

7. Composition selon l'une quelconque des revendications précédentes, dans laquelle l'huile végétale comprend de plus une huile qui n'est pas une huile oléique élevée, dans laquelle l'huile oléique élevée est définie comme une huile dans laquelle la composition d'acide gras comprend plus de 70 % en masse d'acide oléique, sur la base de la masse de l'huile oléique élevée.

8. Composition selon l'une quelconque des revendications précédentes, dans laquelle l'huile oléique élevée est présente dans une quantité de 20 % en masse à 100 % en masse, de préférence de 20 à 80 % en masse sur la base de la masse de l'huile végétale totale dans la composition.

9. Composition selon l'une quelconque des revendications précédentes, dans laquelle l'huile oléique élevée est présente dans une quantité supérieure à 25 % en masse sur la base de la masse de la composition.

10. Composition selon l'une quelconque des revendications précédentes, dans laquelle les acides gras saturés sont présents dans une quantité de 2 à 15 % en masse, sur la base de la masse de l'huile végétale totale.

11. Composition selon l'une quelconque des revendications précédentes, dans laquelle l'extrait de *Morus alba* est présent dans une quantité de 0,01 à 2 % en masse, exprimé comme masse sèche d'extrait sur la masse de composition alimentaire totale.

12. Composition selon l'une quelconque des revendications précédentes, dans laquelle l'extrait de *Morus alba* comprend des polyphénols dans une quantité totale de 0,6 à 15 équivalents d'acide gallique, % GAE, de préférence de 1 à 15 % GAE, sur la base de la masse sèche de l'extrait, et comme déterminé par le dosage de Folin-Ciocalteu.

13. Procédé pour la fabrication d'une composition alimentaire émulsifiée huile-dans-eau selon l'une quelconque des revendications précédentes, le procédé comprenant les étapes consistant à :
a. fournir une phase d'eau comprenant de l'eau,
b. fournir une phase d'huile comprenant une huile végétale comprenant des acides gras en C18:1 et C18:2, dans une quantité, sur la base de la masse de l'huile végétale, de :
• C18:1 de 35 à 95 % en masse, de préférence de 40 à 90 % en masse,
• C18:2 de 1 à 50 % en masse, de préférence de 5 à 45 % en masse,
dans lequel l'huile végétale comprend une huile oléique élevée, qui est définie comme une huile dans laquelle la composition d'acide gras comprend plus de 70 % en masse d'acide oléique, sur la base de la masse de l'huile oléique élevée,
dans laquelle la phase d'eau, la phase d'huile ou les deux comprennent de plus un extrait de *morus alba,*
c. mélanger l'huile et la phase d'eau pour fournir une composition alimentaire émulsifiée.

14. Utilisation d'extrait de *morus alba* dans une quantité de 0,01 à 2 % en masse pour réduire l'arrière-goût dans une composition alimentaire émulsifiée huile-dans-eau, dans laquelle l'émulsion comprend de l'huile végétale et de l'eau, dans laquelle l'huile végétale comprend des acides gras en C18:1 et C18:2, dans une quantité, sur la base de la masse de l'huile végétale, de :
• C18:1 de 35 à 95 % en masse, de préférence de 40 à 90 % en masse,
• C18:2 de 1 à 50 % en masse, de préférence de 5 à 45 % en masse,
dans laquelle l'huile végétale comprend une huile oléique élevée, qui est définie comme une huile dans laquelle la composition d'acide gras comprend plus de 70 % en masse d'acide oléique, sur la base de la masse de l'huile oléique élevée.
